Europäisches Patentamt

European Patent Office

Office européen des brevets

(19)

(11) **EP 0 755 821 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **B60K 28/16**

(21) Anmeldenummer: **96110717.4**

(22) Anmeldetag: **02.07.1996**

(54) **Schaltung zum Steuern des zwischen den Antriebsrädern eines Kraftfahrzeugs und der Fahrbahn übertragenen Drehmoments**

Circuit for controlling the torque transferred between the drive wheels of a motor vehivle and the road surface

Circuit pour commander le couple transféré entre les roues motrices d'une automobile et la chaussée

(84) Benannte Vertragsstaaten:
**DE FR GB**

(30) Priorität: **28.07.1995 DE 19527840**

(43) Veröffentlichungstag der Anmeldung:
**29.01.1997 Patentblatt 1997/05**

(73) Patentinhaber: **SIEMENS AKTIENGESELLSCHAFT**
**80333 München (DE)**

(72) Erfinder: **Probst, Gregor**
**84028 Landshut (DE)**

(56) Entgegenhaltungen:
**EP-A- 0 294 634          DE-A- 4 129 984**
**DE-A- 4 308 903**

## Beschreibung

Die Erfindung betrifft eine Schaltung nach dem Oberbegriff von Anspruch 1. Eine solche Schaltung dient zum Regeln des Motordrehmoments, das über den Antriebsstrang eines Kraftfahrzeugs auf die angetriebenen Räder übertragen wird. Bekanntlich ist ein gewisser Schlupf zwischen den Rädern und der Fahrbahn erforderlich, um die Antriebskräfte bestmöglich auf die Straße zu übertragen. Wird der Schlupf zu groß, können sich instabile Fahrzustände und auch ein erhöhter Reifenverschleiß ergeben. Überholt zum Beispiel der Fahrer eines heckgetriebenen Fahrzeugs in einer langgezogenen Kurve am Ortsausgang ein langsamer vor ihm herfahrendes Fahrzeug und - wobei in der Ortschaft die Straße naß, außerhalb der Ortschaft aber bedingt durch Temperatur und Witterungsverhältnisse glatt ist - und lenkt er dazu das Fahrzeug auf die Gegenfahrbahn und gibt er dabei, um den Überholvorgang schnell abschließen zu können, kräftig Gas, so besteht die Gefahr, daß das Fahrzeug schleudert und im Straßengraben landet.

Eine Schaltung nach dem Oberbegriff des Anspruchs 1 ist aus dem Dokument DE-A-4 129 984 bekannt.

Insbesondere bei leistungsstarken Kraftfahrzeugen wird deshalb zweckmäßigerweise das über die Antriebsräder auf die Fahrbahn übertragene Motor- oder Antriebsdrehmoment so gesteuert, daß dabei der Schlupfzustand der Antriebsräder berücksichtigt wird. Eine bekannte Einrichtung zum Steuern des Schlupfs von Antriebsrädern (EP-B 0 294 634) ein Fahrzeugs mit einem Motor weist Kraftstoffzuführmittel für den Motor, erste und zweite Schlupferfassungsmittel, Kraftstoffzufuhrunterbrechungsmittel, Parametererfassungsmittel und Kraftstoffmengenkorrekturmittel auf. Sie unterscheidet zwischen einem übermäßigen Schlupfzustand, bei dem die Kraftstoffzufuhr unterbrochen wird, und einen kleineren Schlupfzustand, bei dem die Kraftstoffzufuhr abhängig von einem Betriebsparameter, zum Beispiel der Motordrehzahl, korrigiert wird. Der dazu erforderliche Schaltungs- und Programmaufwand ist nicht unerheblich.

Der Erfindung liegt die Aufgabe zugrunde, eine Schaltung zu schaffen, mit der eine wirksame Steuerung des auf die Fahrbahn übertragenen Motordrehmoments unter Anpassung an den jeweiligen Schlupfzustand mit geringem Aufwand ermöglicht wird.

Diese Aufgabe wird erfindungsgemäß durch eine Schaltung nach Anspruch 1 gelöst.

Vorteilhafte Weiterbildungen der Erfindung sind in den Unteransprüchen niedergelegt.

Ausführungsbeispiele der Erfindung werden anhand der Zeichnungen erläutert. Es zeigen:

Figur 1    ein mit einer erfindungsgemäßen Schaltung zum Steuern des zwischen den Antriebsrädern eines Kraftfahrzeugs und der Fahrbahn übertragenen Drehmoments versehenes Kraftfahrzeug,

Figur 2    die erfindungsgemäße Schaltung des Kraftfahrzeugs nach Figur 1 als Blockschaltbild,

Figur 3    eine Diagrammdarstellung des Kraftschlußbeiwerts Rad/Fahrbahn in Fahrzeuglängsrichtung über dem Absolutschlupf bei Antischlupfregelung,

Figur 4    eine Diagrammdarstellung des von der Schaltung nach Figur 2 angeforderten Motordrehmoments bei Antischlupfregelung,

Figur 5    eine Diagrammdarstellung des Kraftschlußbeiwerts in Rad/Fahrbahn in Fahrzeugquerrichtung über dem Absolutschlupf bei schlupfabhängiger Motorschleppmomentregelung,

Figur 6    eine Diagrammdarstellung des von der Schaltung nach Figur 2 angeforderten Motordrehmoments bei schlupfabhängiger Motorschleppmomentregelung, und

Figur 7    ein Ablaufdiagramm eines in der Schaltung nach Figur 2 abgearbeiteten Steuerprogramms.

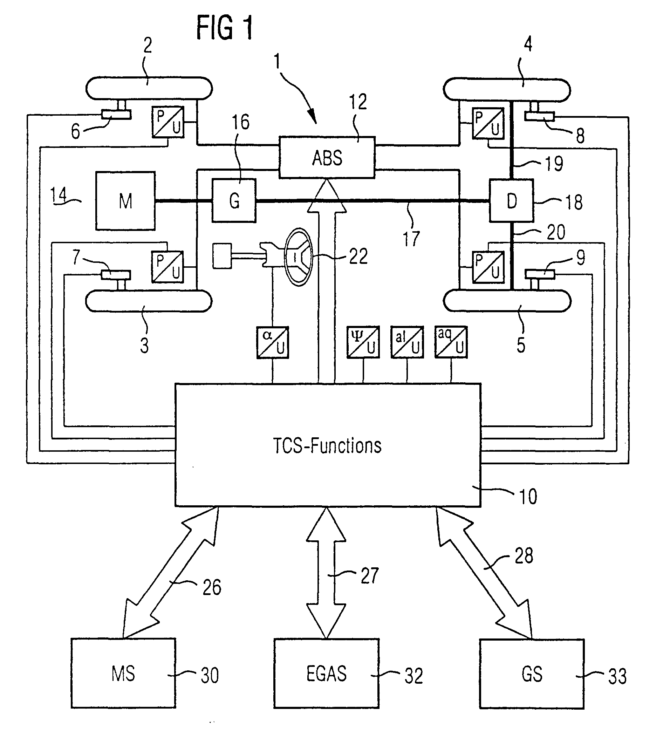

Ein schematisch dargestelltes Kraftfahrzeug 1 (Figur 1) weist zwei vordere, nicht angetriebene Räder 2, 3 und zwei hintere, angetriebene Räder 4, 5 auf. Diesen Rädern zugeordnete Drehzahlsensoren 6 bis 9 erfassen die Raddrehzahlen und liefern entsprechende Drehzahlsignale an eine Schaltung 10 zum Steuern des über die Antriebsräder eine Kraftfahrzeugs auf die Fahrbahn übertragenen Motordrehmoments, im folgenden auch als Traktionssteuergerät 10 bezeichnet. Die Erfindung ist selbstverständlich auch für Kraftfahrzeuge mit Vorderrad- oder Allradantrieb anwendbar.

Ein für sich bekanntes ABS (= Antiblockiersystem) -Steuergerät 12 regelt beim Bremsen den Bremsdruck in den einzelnen Rädern so, daß eine größtmögliche Bremswirkung erreicht wird, das Kraftfahrzeug aber auch beim Bremsen lenkfähig bleibt. Der über ein Bremspedal durch den Fahrer ausgeübte Bremsdruck wirkt wie üblich über einen Bremskraftverstärker oder -regler auf die Bremsen ein. Diese Bremsenbetätigungselemente sind in der Zeichnung nicht dargestellt, da sie allgemein bekannt sind.

Den Rädern 2 bis 5 zugeordnete Drucksensoren P/U erfassen die Radbremsdrücke und liefern entsprechende Signale an das Traktionssteuergerät 10. Auch die von den Sensoren 6 bis 9 gelieferten Signale oder Meßwerte werden über - aus der Zeichnung ersichtliche - Signalleitungen an das Traktionssteuergerät 10 übertragen. Sind keine derartigen Bremsdrucksensoren vorhanden, kann der Bremsdruck durch das ABS-Steuergerät 12 in bekannter Weise auch über eine Modellrechnung laufend ermittelt werden

Ein Antriebsstrang verbindet den Motor 14 mit den Rädern 4 und 5, er besteht aus einer nicht dargestellten Kupplung, einem Getriebe 16, einer Kardanwelle 17, einem Differential 18 und zwei Achswellen 19 und 20.

Das Traktionssteuergerät 10 empfängt außerdem die Signale folgender Sensoren: eines Giergeschwindigkeitssensors Ψ/U, eines Längsbeschleunigungssensors al/U, eines Querbeschleunigungssensors aq/U und eines Lenkradwinkelsensors α/U, der den Drehwinkel eines Lenkrads 22 erfaßt. Das Traktionssteuergerät 10 ist über eine Mehrfachdatenleitung oder Bus 24, über den Daten und Steuersignale übertragen werden, mit dem ABS-Steuergerät 12 verbunden. Über Datenleitungen oder Busse 26, 27 und 28 ist es außerdem mit einer Motorsteuerung (MS) 30, einer elektronischen Motorleistungssteuerung (auch als elektronisches Gaspedal bekannt EGAS) 32 und gegebenenfalls einer Getriebesteuerung (GS) 33 verbunden.

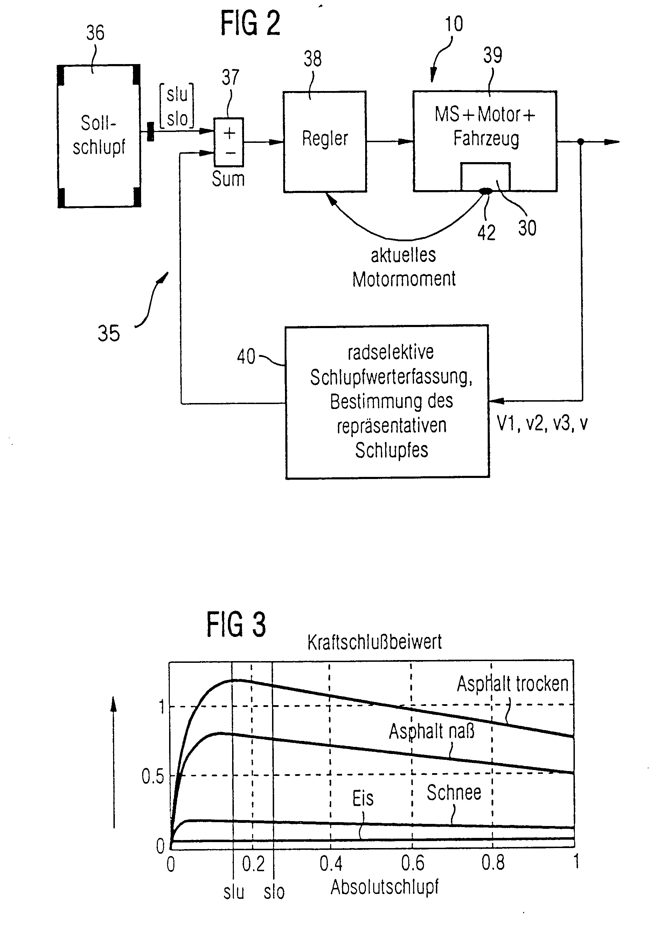

Eine Schaltung 35 (Figur 2) zum Steuern des über die Antriebsräder eine Kraftfahrzeugs auf die Fahrbahn übertragenen Motordrehmoments schließt ein: eine Einrichtung 36 zur Vorgabe von Sollschlupfwerten, ein Summierglied 37, einen Regler 38, eine modifizierte Regelstrecke 39, die aus der Motorsteuerung 30 (vgl. Fig. 1), dem Motor 14 und dem Fahrzeugantrieb oder Antriebsstrang (Getriebe, Gelenkwelle, Differential, Achswellen und Rädern) sowie einer Einrichtung 40 zur radselektiven Erfassung des Schlupfwertes und zur Bestimmung eines repräsentativen Radschlupfes $s_{repr}$ besteht. Wenn nachfolgend die Rede von einem Schlupf oder Schlupfwert ist, ist immer der Radschlupf gemeint, d.h. der Schlupf zwischen einem (angetriebenen) Fahrzeugrad und der Fahrbahnoberfläche. Als repräsentativer Radschlupf $s_{repr}$ wird im Falle, daß bei beiden angetriebene Rädern ein unterschiedlicher Wert erkannt wird, der höhere Wert verwendet. Der Radschlupf eines angetriebenen Rades wird in bekannter Weise als normierte Differenz zwischen seiner Geschwindigkeit oder Drehzahl $v_4$ oder $v_5$ und dem Mittelwert der Geschwindigkeiten oder Drehzahlen $v_1$ und $v_2$ der nicht angetrieben Räder berechnet.

Regelgröße der Schaltung 35 ist eigentlich das von den Rädern auf die Fahrbahn übertragene Motordrehmoment, das sich aber auf die Raddrehzahlen $v_1$, $v_2$, $v_3$ und $v_4$ auswirkt. Diese werden von dem Ausgang der Regelstrecke 39 an den Eingang der Einrichtung 40 übertragen. Das Ausgangssignal dieser Einrichtung, d.h. der repräsentative Schlupf $s_{repr}$ wird dem Summierglied 37 mit umgekehrten Vorzeichen zugeführt und in diesem somit von dem Sollschlupfwert subtrahiert. Das Ergebnis wird dem Regler 38 als Stellgröße eingegeben.

Von einem Ausgang 42 der modifizierten Regelstrecke 39 wird ein das aktuelle Motordrehmoment kennzeichnende (Rückkopplungs-) Signal auf den Regler 38 zurückgeführt. Das aktuelle Motordrehmoment kann dabei unterteilt sein in ein Motorreibmoment und ein induziertes Motormoment.

Durch die Schaltung 35 wird der Antriebsschlupf über einen Motoreingriff geregelt. Bekanntlich kann das Motormoment dabei durch eine Zündwinkelreduzierung oder -spätverstellung, durch eine Abschaltung der Einspritzventile oder durch eine Kombination aus beiden Eingriffen verringert werden. Außerdem kann das auf den Abtriebsstrang wirkende Motormoment durch einen Getriebeeingriff, durch ein radselektives Bremsen oder durch das Schließen einer elektrischen Drosselklappe reduziert werden. Hier erfolgt die Reduktion des Antriebsmoments über einen Motoreingriff. Das Antriebsmoment wird durch die noch zu beschreibende Schlupfregelung gesteuert.

Der Kraftschlußbeiwert oder Reibungskoeffizient zwischen einem Fahrzeugreifen und der Fahrbahnoberfläche wird durch folgende Formel bestimmt, sie gibt den Zusammenhang zwischen der Achslast und der Antriebskraft oder Verzögerungskraft wieder:

$$\mu(s(\alpha)) = \frac{F_x}{F_z}$$

Hierin sind:

$\mu$     der Kraftschlußbeiwert
s     der Radschlupf
$\alpha$     der Radschräglaufwinkel
$F_z$     die Achslast
$F_x$     die Reifenkraft in Längsrichtung zum Rad

In den Figuren 3 und 5 sind theoretische Kraftschlußbeiwerte - longitudinal zur Reifenebene, d.h. in Fahrzeugslängsrichtung - über dem Radschlupf aufgetragen, und zwar in Figur 3 für den Fall der Antriebsschlupfregelung (ASR) und in Figur 5 für den Fall der schlupfabhängigen Motorschleppmomentregelung (MSR). Diese Kraftschlußbeiwerte gelten für einem festen Schräglaufwinkel der Räder von 10 Grad und für unterschiedliche Beschaffenheiten der Straßenoberflächen (Asphalt trokken, Asphalt naß, Schnee und Eis).

Der Kraftschlußbeiwert in Fahrzeuglängsrichtung ist ausschlaggebend für eine gute Traktion, der (hier nicht dargestellte da bekannte) Kraftschlußbeiwert in Fahrzeugquerrichtung ist ausschlaggebend für das Seitenführungskraftverhalten und eine gute Lenkbarkeit des Fahrzeuges. Allgemein geht eine gute Traktion auf Kosten einer guten Lenkfähigkeit und umgekehrt.

Eine Messung der realen Reifenkennlinien und ein Vergleich mit den theoretischen Reifenkennlinien zeigt jedoch starke Abweichungen. Eine Erfassung der realen Reifenkennlinie müßte in dem Fahrzeug "on line" und unter Kenntnis der aktuellen Straßenoberfläche in Echtzeit erfolgen, um auf das Maximum der Traktion oder Lenkbarkeit des Fahrzeuges das Antriebsmoment regeln zu können. Eine solche Regelung ist jedoch vom Programmaufwand und von der Rechenkapazität nicht ganz unerheblich, denn für die Erfassung des Kraftschlußbeiwertes ist die Erfassung der oben genannten physikalischen Größen notwendig, wozu aber zusätzliche Sensoren erforderlich wären. Deshalb wird erfindungsgemäß eine Schlupfregelung und nicht eine Kraftschlußbeiwertregelung durchgeführt.

Abhängig von der jeweiligen Fahrsituation wird ein obere Grenze slo und eine untere Grenze slu des Radsollschlupfes vorgegeben. Der Regler 38 erhält vom Fahrzeugantrieb 39 das aktuell abgegebene Motordrehmoment. Das Motordrehmoment wirkt sich über die Verkopplung zwischen Antriebsstrang und Straßenoberfläche auf die Raddrehzahl aus. Aus den vier gemessenen Raddrehzahlen $v_1$ - $v_4$ wird in bekannter Weise je ein radselektiver Schlupf berechnet. Der von dem Regler 38 empfangene Motormomentwert wird in der Motorsteuerung 30 in bekannter Weise aus der gemessenen Luftmasse, der Motordrehzahl und anderen Motorgrößen berechnet.

Die aus den Figuren 3 und 5 ersichtliche Kraftschlußbeiwertkurve läßt sich abhängig von dem Radschlupf in drei Bereiche aufteilen:

| Nr.: | Bereich | Absolutschlupf |
|------|---------|----------------|
| 1 | stabiler Bereich | 0 ...0.10 |
| 2 | Regelbereich | 0.10...0.25 |
| 3 | instabiler Bereich | 0.25...1.0 |

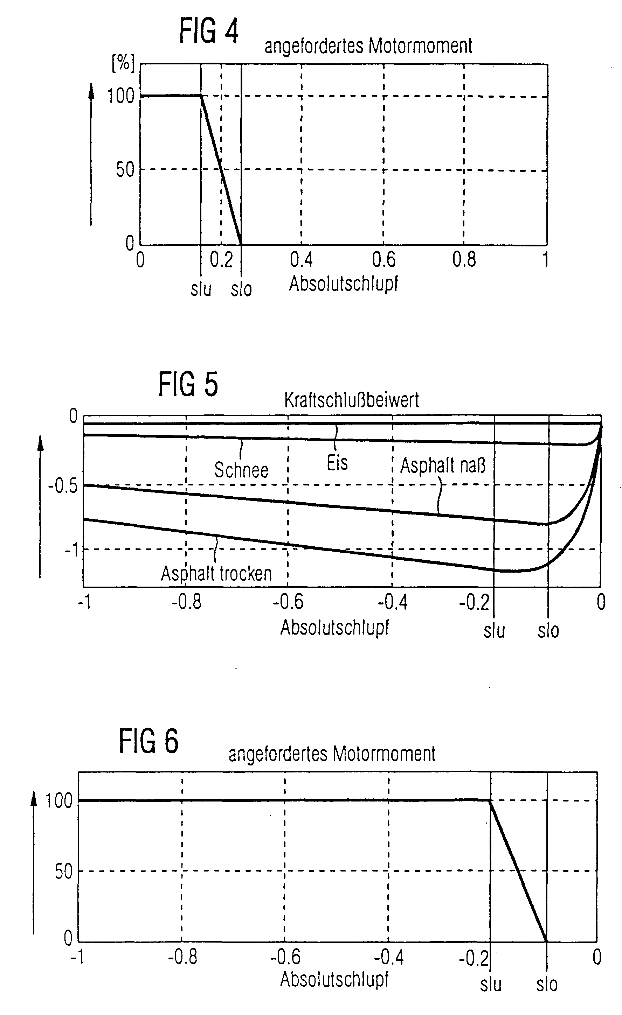

In dem stabilen Bereich bleibt das Motormoment unbeschränkt, in dem Regelbereich wird das aktuelle Motormoment linear heruntergeregelt und in dem instabilen Bereich wird das Motormoment völlig weggenommen. Das solchermaßen von der Schaltung 35 angeforderte Motordrehmoment ist in Figur 4 für den ASR-Fall, das heißt für eine Antriebsschlupfregelung, und in Figur 6 für den MSR-Fall, das heißt für eine Motorschleppmomentregelung bei bremsendem Motor, dargestellt. Das Motordrehmoment wird in dem Traktionssteuergerät 10 als Funktion des von der Einrichtung 40 gelieferten repräsentativen Radschlupfes $s_{repr}$ ermittelt, und zwar durch Berechnen eines Verstärkungsfaktors V für das aktuelle Motordrehmoment $M_{mot}$ :

$$M_{mot} = V \cdot s_{repr}$$

Die Funktion kann zum Beispiel eine Gerade, eine Cosinuslinie oder eine hystereseartige Kurve sein. Das Motordrehmoment kann Werte zwischen 0 und 100 % annehmen (Figuren 4 und 6).

Die Zustandsgrößen des Kraftfahrzeugs oder Fahrparameter werden mit einer für sich bekannten Modellberechnung laufend ermittelt und bei der Bestimmung jeweils eines repräsentativen Radschlupfes $s_{repr}$ berücksichtigt.

Die erfindungsgemäße Steuerung des Motordrehmoments zum Zwekke der Radschlupfregelung wird durch eine in dem Traktionssteuergerät 10 enthaltene elektronische Steuereinheit, z.B. in Form eines - allgemein bekannten und deshalb nicht weiter dargestellten - Mikroprozessors realisiert, der das aus Figur 6 ersichtliche Programm zyklisch in folgenden Schritten abgearbeitet:

In einem **Schritt S0** werden die Raddrehzahlen und andere Signale von den in dem Kraftfahrzeug vorhandenen Sensoren eingelesen.

Danach wird in einem **Schritt S1** die Fahrzeugreferenzgeschwindigkeit aus den Sensorsignalen ermittelt. Die radselektiven Radschlupfwerte werden in S2 berechnet.

Die Schlupfwerte der beiden Antriebsräder werden in einem **Schritt S3** gewichtet und es wird daraus ein repräsentativer Schlupfwert berechnet.

In einem **Schritt S4** werden wie erwähnt

| | |
|---|---|
| eine positive obere Schlupfschwelle | slp_hp_o |
| eine positive untere Schlupfschwelle | slp_hp_u |
| eine negative obere Schlupfschwelle | slp_hn_o und |
| eine negative untere Schlupfschwelle | slp_hn_u |

bestimmt.

Ist der resultierende Schlupf größer als die positive untere Schlupfgrenze wird in einem **Schritt S5** nach S7 verzweigt.

Ist der resultierende Schlupf kleiner als die obere negative Schlupfgrenze wird in einem **Schritt S6** nach S8 verzweigt.

In einem **Schritt S7** wird ein Bit b_asr gesetzt und ein Bit b_msr definiert auf 0 gesetzt.

Ist b_asr=1 wird eine ASR-Fall erkannt, d.h. der Radschlupf an der antreibenden Achse ist positiv und in dem Regelbereich der Kraftschlußbeiwertkennlinie. Ist b_msr=0 wird kein MSR-Fall erkannt, d.h. der Radschlupf an der antreibenden Achse ist nicht negativ.

In einem **Schritt S8** werden das Bit b_asr definiert auf null und b_msr auf 1 gesetzt, d.h. an der angetriebenen Achse wird eine negativer Radschlupf erkannt.

In einem **Schritt S9** werden, falls der resultierende Schlupf nicht oberhalb der positiven unteren Grenze und nicht unterhalb der negativen unteren Grenze liegt und damit der Radschlupf im stabilen Bereich ist, in dem nicht geregelt werden muß, die Bits b_asr und b_msr definiert auf 0 gesetzt.

In einem **Schritt S10** wird der resultierende Schlupf auf die positive obere Schlupfgrenze geprüft.

In einem **Schritt S11** wird geprüft, ob der Schlupf unter der negativen unteren Schlupfgrenze liegt.

In einem **Schritt S12** wird, wenn der Schlupf über der positiven oberen Schlupfgrenze liegt, eine totale Reduzierung des Motormoments angefordert.

**Schritt S13:** Liegt der Schlupf zwischen der positiven unteren und der positiven oberen Schlupfgrenze wird über folgende Formel das angeforderte Motormoment berechnet:

$$MD\_IND\_XXX=(MD\_IND+MD\_REIB)/(slp\_hp\_o-slp\_hp\_u)*(slp\_hp\_o-slp\_h))$$

**Schritt S14:** Liegt der Schlupf unterhalb der negative unteren Schlupfschwelle, wird das maximale Motormoment (Summe aus dem aktuell induzierten Motormoment und dem aktuellen Motorreibmoment) angefordert. In diesem Fall ist die Drosselklappe in der Regel geschlossen.

**Schritt S15:** Liegt der Schlupf zwischen der negativen unteren und der negativen oberen Schlupfgrenze wird über folgende Formel das angeforderte Motormoment berechnet:

$$MD\_IND\_XXX= MD\_IND+MD\_REIB)/(slp\_hn\_u - slp\_hn\_o) * (slp\_h - slp\_hn\_o)$$

**Schritt S16:** Wird kein Eingriff vom Motor erwartet, wird ein Motormoment von 0 angefordert.

**Schritt S17:** Abschließend wird der Wert für das angeforderte Motormoment und die beiden Bit b asr, b_msr an die Motorsteuerung übertragen.

In den Figuren 4 und 6 sind die untere Schlupfschwelle und die obere Schlupfschwelle für beide Regelungsfälle vereinfacht mit slu und slo bezeichnet. Im positiven Fall, d.h. bei ASR-Regelung, sind im dargestellten Beispiel slu = 0,15 und slo = 0,25, in negativen Fall, d.h. bei MSR-Regelung sind slu = -0,2 und slo = -0,1.

Zusammenfassend sein die erfindungsgemäße Schaltung 10 wie folgt beschrieben. Sie dient zum Steuern des über die Antriebsräder eines Kraftfahrzeugs auf die Fahrbahn übertragenen Motordrehmoments. Sie weist eine Einrichtung 40 zur radselektiven Schlupfwerterfassung und zur Bestimmung eines repräsentativen Radschlupfes $s_{repr}$, eine Einrichtung 36 zur Vorgabe eines Sollschlupfes und eine den Schlupfzustand berücksichtigende Motorsteuerung 30 auf. Der Motorsteuerung ist ein Regler 38 vorgeschaltet, dem die Differenz zwischen dem Sollschlupf und dem repräsentativen Radschlupf als Regeldifferenz zugeführt wird. Von der Motorsteuerung 30 wird ein das aktuelle Motordrehmoment kennzeichnendes Rückkopplungssignal an den Regler 38 übermittelt.

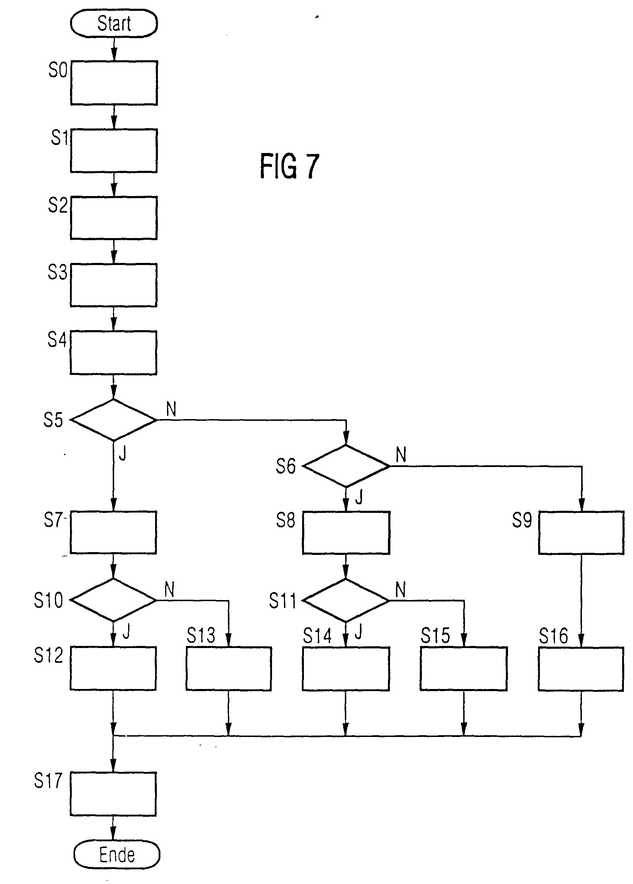

Die der vorstehend erläuterten Schaltung 35 wird der Kraftschlußbeiwert direkt auf das angeforderte Motormoment abgebildet, wie sich aus dem Zusammenhang der Figuren 3 und 4 einerseits und der Figuren 5 und 6 andererseits ergibt. Daraus erfolgt eine sehr einfache Reglerstruktur und ein sehr einfaches Reglerprogramm (Figur 7). Im Gegensatz zu bekannten Antriebsregelungen für Kraftfahrzeuge, bei denen recht umfangreiche Berechnungen des Luftwiderstandes, des Rollwiderstandes und des Steigungswiderstandes unter Berücksichtigung vielfältiger Meßgrößen und Störeinflüssen wie Steigung, Anhägelast, Zuladung, Fahrzeugmasse, Fahrzeugträgheitsmomente, $c_w$-Wert, Luftdichte, Beschleunigungswiderstand usw. durchgeführt werden müssen, und die deshalb sehr aufwendige Reglerprogramme benötigen, sind derartig aufwendige Berechnungen bei der beschriebenen Schaltung nicht nötig.

**Patentansprüche**

1.  Schaltung zum Steuern des zwischen den Antriebsrädern (4, 5) eines Kraftfahrzeugs (1) und der Fahrbahn übertragenen Drehmoments, mit einer Einrichtung (40) zur radselektiven Schlupfwerterfassung und zur Bestimmung eines repräsentativen Radschlupfes ($s_{repr}$), einer Einrichtung (36) zur Vorgabe eines Sollschlupfes und einer den Schlupfzustand berücksichtigenden Motorsteuerung (30), wobei der Motorsteuerung (30) ein Regler (38) vorgeschaltet ist, dem die Differenz zwischen dem Sollschlupf und dem repräsentativen Radschlupf ($s_{repr}$) als Regel-

differenz zugeführt wird, **dadurch gekennzeichnet,**
**daß** von dem Ausgang der Motorsteuerung (30) ein das aktuelle Motordrehmoment kennzeichnendes Rückkopplungssignal an den Regler (38) übermittelt wird.

2. Schaltung nach Anspruch 1, **dadurch gekennzeichnet, daß** das Motordrehmoment ($M_{mot}$) durch Berechnen eines Verstärkungsfaktors V für das aktuelle Motordrehmoment als Funktion eines von der Einrichtung (40) gelieferten repräsentativen Radschlupfes ($s_{repr}$) ermittelt wird.

3. Schaltung nach Anspruch 1, **dadurch gekennzeichnet, daß** mit einer Modellberechnung laufend ermittelte Fahrzeugparameter des Kraftfahrzeugs bei der Bestimmung jeweils eines repräsentativen Radschlupfes ($s_{repr}$) berücksichtigt werden.

4. Schaltung nach Anspruch 1, **dadurch gekennzeichnet, daß** durch die Einrichtung (36) zur Vorgabe eines Sollschlupfes eine untere und eine Schlupfschwelle (slo, slu; slp_hp_o, slp_hp_u, slp_hn_o, slp_hn_u) bestimmt und abhängig von Fahrzeugzustandsgrößen verschoben werden.

## Claims

1. Circuit for controlling the torque transmitted between the driving wheels (4, 5) of a motor vehicle (1) and the carriageway, with a device (40) for detecting the slip value on a wheel-selective basis and for determining a representative wheel slip $s_{repr}$, a device (36) for setting a reference slip value and an engine controller (30) which takes account of the slip status, where a regulator (38), to which the difference between the reference slip value and the representative wheel slip $s_{repr}$ is fed as a system deviation, is connected upstream of the engine controller (30), **characterised in that** a feedback signal identifying the current engine torque is returned to the regulator (38) from the output of the engine controller (30)

2. Circuit in accordance with Claim 1, **characterised in that** the engine torque $M_{mot}$ is determined by calculating an amplification factor V for the current engine torque as a function of the representative wheel slip ($s_{repr}$) supplied by the device (40).

3. Circuit in accordance with Claim 1, **characterised in that** vehicle parameters for the motor vehicle which are ascertained continuously by means of a model calculation are taken into consideration in the determination of each representative wheel slip ($s_{repr}$)

4. Circuit in accordance with Claim 1, **characterised in that** a lower and an upper slip threshold (slo, slu, slp_hp_o, slp_hp_u, slp_hn_o, slp_hn_u) are determined and shifted depending on vehicle status variables by the device (36) for setting a reference slip values.

## Revendications

1. Circuit pour commander le couple transmis entre les roues motrices (4,5) d'un véhicule automobile (1) et la chaussée, comprenant un dispositif (40) pour la détection sélective sur chaque roue de la valeur du glissement et pour la détermination d'un glissement de roue représentatif ($s_{repr}$), un dispositif (36) pour la prédétermination d'un glissement de consigne et une commande (30) de moteur qui prend en compte l'état de glissement, dans lequel est monté, en amont de la commande (30) du moteur, un régulateur (38) auquel la différence entre le glissement de consigne et le glissement de roue représentatif ($S_{repr}$) est transmise en qualité de différence de régulation, **caractérisé en ce qu'**un signal de réaction caractérisant le couple moteur actuel est transmis de la sortie de la commande (30) du moteur au régulateur (38).

2. Circuit selon la revendication 1, **caractérisé en ce que** le couple moteur ($M_{mot}$) est donné par le calcul d'un facteur d'amplification V pour le couple moteur actuel en fonction d'un glissement de roue représentatif ($s_{repr}$) fourni par le dispositif (50).

3. Circuit selon la revendication 1, **caractérisé en ce que** des paramètres du véhicule automobile qui sont mesurés continuellement avec un calcul modélisé sont pris en compte dans la détermination d'un glissement de roue représentatif ($s_{repr}$).

4. Circuit selon la revendication 1, **caractérisé en ce qu'**un seuil inférieur de glissement et un seuil de glissement (slo, slu , slp_hp_o, slp_hp_u, slp_hn_o, slp_hn_u) sont déterminés et décalés en fonction de grandeurs d'état du véhicule par le dispositif (36) destiné à prédéterminer un glissement de consigne.

# FIG 1

## FIG 2

36

$\begin{bmatrix} slu \\ slo \end{bmatrix}$

37

38

10

39

Soll-schlupf

Sum

Regler

MS + Motor + Fahrzeug

42    30

aktuelles Motormoment

35

40

radselektive Schlupfwerterfassung, Bestimmung des repräsentativen Schlupfes

V1, v2, v3, v

## FIG 3

Kraftschlußbeiwert

Asphalt trocken

Asphalt naß

Eis        Schnee

1

0.5

0

0        0.2    0.4    0.6    0.8    1

slu    slo    Absolutschlupf

## FIG 4

angefordertes Motormoment

## FIG 5

Kraftschlußbeiwert

Schnee    Eis    Asphalt naß

Asphalt trocken

Absolutschlupf

## FIG 6

angefordertes Motormoment

Absolutschlupf

FIG 7